# FASCICULE DE BREVET EUROPEEN

(11) **EP 1 099 202 B1**
(45) Date de publication et mention de la délivrance du brevet: **13.02.2002**
(21) Numéro de dépôt: 99929452.3
(22) Date de dépôt: 09.07.1999
(51) Int. Cl.: G08B 25/08, G08B 15/00

(54) **DISPOSITIF DE TELE-VIDEO-SURVEILLANCE**
VORRICHTUNG ZUR FERN-VIDEOÜBERWACHUNG
TELEVIDEO MONITORING DEVICE

(30) Priorité: 10.07.1998 FR 9808938
(43) Date de publication de la demande: 16.05.2001
(73) Titulaire: Loureiro Nunes Solposto, Manuel Antonio, 93100 Montreuil sous Bois (FR)
(72) Inventeur: Loureiro Nunes Solposto, Manuel Antonio, 93100 Montreuil sous Bois (FR)
(74) Mandataire: Verdier, Louis
(86) Numéro de dépôt international: FR9901673
(87) Numéro de publication internationale: WO0003367

(56) Documents cités:
- GB-A- 2 062 422
- GB-A- 2 296 150
- US-A- 3 886 538
- US-A- 5 512 935

## Description

La présente invention concerne un dispositif de télé-vidéo-surveillance de zones sensibles en résidence préalablement pourvue d'un réseau câblé de distribution d'une pluralité de canaux de signaux de télévision.

On connait du document FR-A-2 741 498 une installation pour le contrôle des accès à un immeuble dans laquelle le signal vidéo issu d'une caméra est modulé pour être inséré dans le réseau de distribution interne de la télévision ou antenne collective. Ainsi, tout possesseur d'une télévision dans cet immeuble peut regarder l'image issue de la caméra en choisissant le canal approprié sur son téléviseur.

Une telle installation se substitue avantageusement aux vidéo-interphones qu'elle remplace de façon moins coûteuse, puisqu'elle ne nécessite ni un câblage spécifique lourd ni un moniteur dédié dans chaque appartement, et elle vient généralement compléter et améliorer un interphone déjà installé.

Toutefois, il s'agit d'un système de sécurité élémentaire ne permettant ni une surveillance centralisée de plusieurs zones sensibles et ni la détection de l'occurrence d'un événement déterminé, tel que la fracture ou le blocage d'une porte, le feu dans un local, etc...

La présente invention se situe dans ce contexte et a pour but d'obvier à ces inconvénients tout en gardant l'avantage de la modicité du coût et de la facilité de pose.

Le dispositif de télé-vidéo-surveillance de zones sensibles selon l'invention est disposé en série avec le réseau câblé de distribution des canaux de télévision, et détermine des canaux additionnels de télévision pour les utilisateurs du réseau. Ces canaux additionnels sont définis chacun par un modulateur relié à au moins une caméra vidéo de surveillance constante d'une des zones sensibles de la résidence, de telle manière qu'en tout point de la résidence relié au réseau câblé, il soit possible de voir sur un téléviseur conventionnel une image issue de la caméra vidéo. La résidence comporte, en outre, une régie centralisée susceptible de recevoir les signaux issus de cette au moins une caméra vidéo de surveillance constante.

Selon la présente invention, chaque caméra vidéo de surveillance constante est accouplée à une ligne de sécurité susceptible d'une détection de l'occurrence d'au moins un évènement spécifique, le dispositif comportant des moyens pour que cette détection provoque une signalisation correspondante appliquée à la régie centralisée, le routage des signaux correspondants vers cette régie centralisée et l'arrêt de la transmission des signaux correspondants sur le canal additionnel correspondant du réseau de télédistribution de la résidence.

De façon avantageuse, le dispositif de télé-vidéo-surveillance comprend, en outre, des moyens pour que cette détection provoque la mise en service automatique d'un magnétoscope dans la régie centralisée enregistrant toutes les images reçues d'au moins une caméra vidéo correspondant à l'occurrence.

De préférence, le routage des signaux vers la régie centralisée et l'arrêt de la transmission des signaux correspondants sur le réseau câblé est obtenu au moyen d'un inverseur disposé en entrée du modulateur correspondant ou en sortie du dispositif et est commandé à partir de la ligne de sécurité.

De préférence encore, la ligne de sécurité commande, en outre, la déconnexion de la caméra vidéo de surveillance constante et la connexion d'une caméra vidéo de surveillance spécifique dite de sécurité.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle deux planches de dessins sont annexées sur lesquelles:
La Figure 1 illustre schématiquement un premier mode de réalisation préféré d'un dispositif de télé-vidéo-surveillance conforme à la présente invention ; et
La Figure 2 illustre schématiquement un deuxième mode de réalisation de la présente invention.

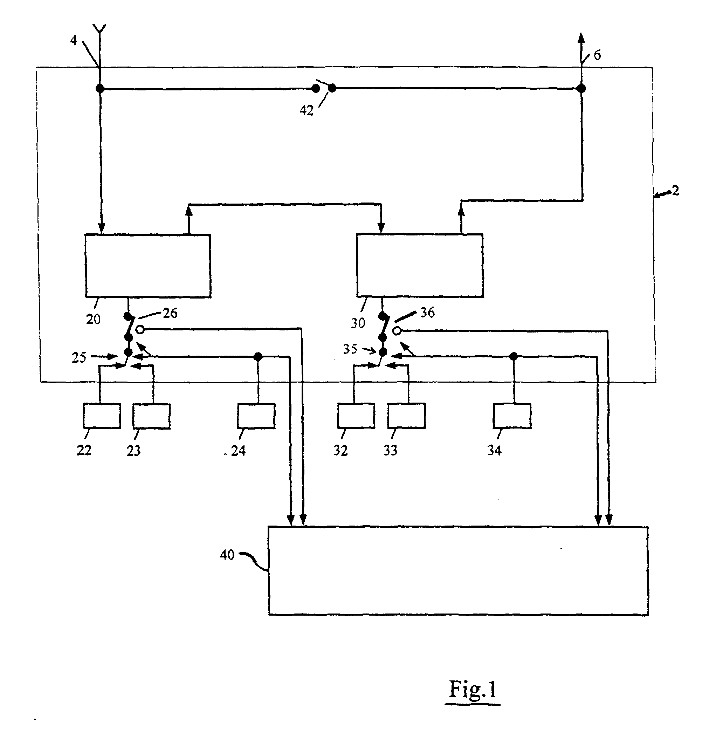

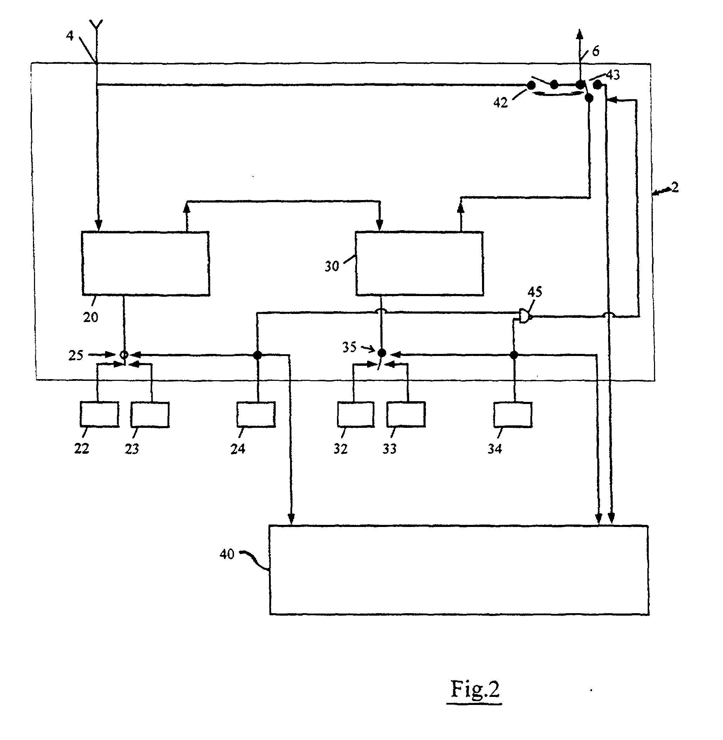

En référence maintenant aux Figures 1 et 2, le dispositif de télé-vidéo-surveillance 2 est connecté en série dans le réseau de distribution des canaux de télévision, généralement appelé antenne collective, en amont des points de distribution chez les utilisateurs de la résidence ainsi équipée. Les signaux de télévision issus des modulateurs conventionnels entrent par la borne 4 et sortent par la borne 6 vers les points de distribution.

Dans les exemples représentés, le dispositif ne comporte, pour des raisons de clarté, que deux points de surveillance, mais il est évident qu'il peut en comporter un bien plus grand nombre. De ce fait, seuls deux modulateurs 20 et 30 ont été représentés, mais l'homme du métier saura sans effort particulier généraliser le schéma à plusieurs autres points de surveillance.

Par ailleurs, dans les exemples représentés, le dispositif est en fonctionnement normal, c'est à dire que les inverseurs et commutateurs sont représentés en l'état où ils sont normalement, c'est à dire lorsqu'il n'y aucune alerte en cours.

Chaque modulateur 20, 30 est connecté à une caméra vidéo de surveillance constante 22, 32, et transforme le signal vidéo entrant issu de la caméra en un signal modulé sur une porteuse d'une fréquence appropriée.

Le signal entrant à la borne 4 est d'abord appliqué au premier modulateur 20, et est mixé avec le signal modulé issu de la caméra 22, pour être ensuite appliqué à l'entrée du modulateur 30. Là, il est mixé avec le signal modulé issu de la caméra 32 pour être ensuite injecté dans le réseau de distribution par la borne de sortie 6 du dispositif.

Conformément à l'invention, chaque caméra vidéo de surveillance constante 22, 32 est accouplée à une ligne de sécurité 24, 34 susceptible d'une détection de l'occurrence d'au moins un évènement spécifique.

Par évènement spécifique, on entend un blocage ou une fracture de porte, le déclenchement d'un appel de secours, par exemple dans un ascenseur, un début d'incendie, par exemple dans un local fermé tel un garage ou une cave, et tout autre évènement équivalent demandant une intervention extérieure plus ou moins rapide. On entend également une demande expresse de la régie centralisée.

Ainsi, la ligne de sécurité 24, 34 est rendue active par des détecteurs appropriés bien connus de l'homme du métier de la sécurité et du gardiennage, et disposés dans des zones sensibles déterminées (hall d'entrée, escaliers, ascenseurs, garage, caves, ou même jardins pour enfants, etc...).

Une régie centralisée 40 reçoit l'information issue de ces lignes de sécurité 24, 34, pour y déterminer déjà une signalisation appropriée lors de l'occurrence d'un évènement spécifique déterminé.

De façon plus spécifiquement en relation avec le schéma de la Figure 1, la ligne de sécurité 24, 34 commande le routage des signaux issus des caméras vers la régie centralisée 40 grâce à l'inverseur correspondant 26, 36. Les images de l'événement ne sont alors plus transmises sur le réseau câblé, de manière à éviter de choquer éventuellement un utilisateur regardant son téléviseur, et à éviter également toute forme de voyeurisme.

De préférence, la régie centralisée 40 inclut un magnétoscope (non représenté) qui enregistre alors toutes les images de l'événement spécifique, images qui pourront ensuite être exploitées par la police, les pompiers ou par tout autre équipe susceptible d'intervenir sur les lieux.

De façon préférée, une deuxième caméra vidéo dite de sécurité 23, 33 peut alors mise en service par la ligne de sécurité 34, 34, au moyen de l'inverseur 25, 35. Une telle caméra de sécurité 23, 33 peut être avantageuse, par exemple lorsque l'on souhaite une vue prise sous un autre angle ou sous un plus grand angle. En outre, cette caméra peut également être reliée à un circuit phonique comportant microphones et haut-parleurs de manière à assurer une communication totale entre la régie 40 et le lieu de l'événement.

Le dispositif de télé-vidéo-surveillance selon l'invention peut avantageusement comprendre un moyen de shunt 42 disposé entre ses bornes 4 et 6 reliées au réseau câblé de distribution. Ainsi, le dispositif peut être automatiquement mis hors service en cas de défaillance de l'un de ses composants, par exemple du à un vandalisme, sans nuire aux utilisateurs du réseau de distribution.

En référence maintenant plus spécifiquement à la Figure 2, sur laquelle les mêmes éléments portent les mêmes références numériques, les inverseurs 26 et 36 ont été supprimés au profit d'un inverseur unique 43.

Cet inverseur 43 est disposé en série avec la borne de sortie 6 du dispositif 2 et fonctionne en même temps que le commutateur 42.

Les signaux issus des lignes de sécurité 24 et 34 sont appliqués à une porte logique 45 de manière à activer l'inverseur 43 lors de l'occurrence d'un évènement spécifique quelque soit son lieu. Le commutateur 42 est en même temps activé. Ainsi, en cas d'événement quel qu'il soit, le réseau de distribution des canaux de télévision est automatiquement fermé par le commutateur 42, pour que les utilisateurs continuent à recevoir normalement la télévision, tandis que les signaux issus des caméras du dispositif de télé-vidéo-surveillance sont intégralement et automatiquement routés vers la régie centralisée 40.

Pour un bon fonctionnement du système, on peut prévoir que l'inverseur 43 et le commutateur 42 prennent automatiquement la position qu'ils auraient en cas d'alerte lorsqu'un problème d'alimentation électrique du dispositif est détecté.

Bien évidemment, un module simple incluant juste une caméra et un modulateur peut être disposé en série avec le dispositif de l'invention pour permettre à l'utilisateur de continuer à recevoir une image correspondant à l'accès de la résidence, par exemple au niveau de l'interphone.

L'homme du métier aura compris que le dispositif selon l'invention peut être facilement réalisé sous forme d'un circuit dont les composants fixés sur une carte imprimée sont noyés au moins partiellement dans une résine époxyde.

Bien que l'on ait représenté et décrit ce que l'on considère actuellement être les modes de réalisation préférés de la présente invention, il est évident que l'Homme de l'Art pourra y apporter différents changements et modifications sans sortir du cadre de la présente invention tel que défini par les revendications jointes.

Par exemple, les inverseurs et commutateurs peuvent être réalisés aussi bien sous forme de portes électroniques transistorisées que sous forme de relais bobinés électro-mécaniques.

Par exemple également, chaque composant ou module de base peut comporter sa propre alimentation en puissance, de manière à éviter qu'une défaillance quelconque de l'un d'eux n'entraîne la défaillance totale du dispositif.

De même, les signaux modulés peuvent être transmis sous forme numérique et traités par ordinateur, notamment dans la régie centralisée 40. Ils peuvent également être multiplexés si le nombre de zones sensibles à surveiller est important ou si la bande passante disponible sur le réseau de distribution des canaux de télévision est saturée.

De même également, le dispositif peut comprendre un moyen de signalisation autonome permettant d'avertir la dite régie centralisée 40 de sa mise hors service.

Conformément à la règlementation en vigueur, notamment en France, la borne correspondant à la prise de son de la caméra vidéo de surveillance constante 22, 32 est mise à la masse.

On aura compris que le dispositif selon l'invention permet d'assurer une surveillance de grande qualité par rapport aux systèmes existants, et ceci, sans nécessiter un nouveau câblage spécifique des lieux privés, donc pour un coût relativement faible.

## Revendications

1. Dispositif de télé-vidéo-surveillance de zones sensibles en résidence préalablement pourvue d'un réseau câblé de distribution d'une pluralité de canaux de signaux de télévision, le dit dispositif (2) étant disposé en série avec le dit réseau câblé et déterminant des canaux additionnels de télévision pour les utilisateurs du dit réseau, les dits canaux additionnels étant définis chacun par un modulateur (20, 30) relié à au moins une caméra vidéo (22, 32) de surveillance constante de l'une des dites zones sensibles de la dite résidence, de telle manière qu'en tout point de la dite résidence relié au dit réseau câblé, il soit normalement possible de voir sur un téléviseur conventionnel une image issue de la dite caméra vidéo (22, 32), la dite résidence comportant une régie centralisée (40) susceptible de recevoir les signaux issus de la dite au moins une caméra vidéo (22, 32) de surveillance constante,
**caractérisé en ce que**
chaque caméra vidéo (22, 32) de surveillance constante est accouplée à une ligne de sécurité (24, 34) susceptible d'une détection de l'occurrence d'au moins un évènement spécifique, le dit dispositif (2) comportant des moyens (26, 36 ; 43) pour que la dite détection provoque une signalisation correspondante appliquée à la dite régie centralisée (40), le routage des signaux correspondants vers la dite régie centralisée et l'arrêt de la transmission des dits signaux correspondants sur le canal additionnel correspondant du réseau de télédistribution de la dite résidence.

2. Dispositif de télé-vidéo-surveillance selon la revendication 1, **caractérisé en ce qu'**il comprend, en outre, des moyens pour que la dite détection provoque la mise en service automatique d'un magnétoscope dans la dite régie centralisée (40) enregistrant toutes les images reçues d'au moins une caméra vidéo (22, 23 ; 32, 33) correspondant à la dite occurence.

3. Dispositif de télé-vidéo-surveillance selon la revendication 1 ou 2, **caractérisé en ce que** le routage des signaux vers la dite régie centralisée (40) et l'arrêt de la transmission des signaux sur le réseau câblé est obtenu au moyen d'un inverseur (26, 36) disposé en entrée du dit modulateur correspondant (20, 30) et commandé à partir de la dite ligne de sécurité (24, 34).

4. Dispositif de télé-vidéo-surveillance selon la revendication 1 ou 2, **caractérisé en ce que** le routage des signaux vers la dite régie centralisée (40) et l'arrêt de la transmission des signaux sur le réseau câblé est obtenu au moyen d'un inverseur (43) disposé en série avec la borne de sortie (6) du dit dispositif (2) et commandé à partir de la dite ligne de sécurité (24, 34) au moyen d'une porte logique (45).

5. Dispositif de télé-vidéo-surveillance selon l'une quelconque des revendications précédentes, **caractérisé en ce que** la dite ligne de sécurité (24, 34) commande, en outre, la déconnexion de la dite caméra vidéo (22, 32) de surveillance constante et la connexion d'une caméra vidéo (23, 33) de surveillance spécifique dite de sécurité.

6. Dispositif de télé-vidéo-surveillance selon l'une quelconque des revendications précédentes, **caractérisé en ce qu'**il comprend un moyen de shunt (42) disposé entre ses bornes (4, 6) reliées au dit réseau câblé de distribution et prévu pour mettre le dit dispositif (2) hors service en cas de défaillance'de l'un de ses composants.

7. Dispositif de télé-vidéo-surveillance selon la revendication 5, **caractérisé en ce qu'**il comprend un moyen de signalisation autonome permettant d'avertir la dite régie centralisée (40) de sa mise hors service.

## Patentansprüche

1. Vorrichtung zur Fern-Videoüberwachung von sensiblen Wohngegenden, wobei ein Verteilerkabelnetz vorher mit einem einer Vielzahl von Fernsehsignalkanälen versehen ist, wobei besagte Vorrichtung (2) in Reihe mit besagtem Kabelnetz geschaltet ist und zusätzliche Fernsehkanäle für die Benutzer des besagten Netzes bestimmt sind, wobei die besagten zusätzliche Kanäle jeweils durch einen Modulator (20, 30) definiert sind, der mit mindestens einer Videokamera (22, 32) zur konstanten Überwachung einer der besagten Wohngegenden verbunden ist, derart, dass es an jedem Punkt des mit dem genannten Kabelnetz verbundenen Wohnhauses möglich sein sollte, über einen konventionellen Fernseher ein aus der genannten Videokamera (22, 32) kommendes Bild zu sehen, wobei besagtes Wohnhaus einen zum Empfang der aus mindestens einer konstanten Videoüberwachungskamera (22, 32) kommenden Signale geeigneten zentralisierten Kontrollpunkt (40) umfasst,
**gekennzeichnet dadurch, dass**
jede Videokamera (22, 32) zur konstanten Überwachung an eine für eine Ermittlung mindestens eines spezifischen Vorfalles geeignete Sicherheitslinie (24, 34) angekoppelt ist, wobei die genannte Vorrichtung (2) Mittel (26, 36, 43) enthält, damit die genannte Ermittlung eine an dem zentralisierten Kontrollpunkt (40) angebrachte entsprechende Signalisierung, eine Übermittlung der entsprechenden Signale in Richtung des zentralisierten Kontrollpunktes und das Ende der Übertragung der genannten entsprechenden Signale auf dem zusätzlichen entsprechenden Kanal des Fernsehverteilernetzes des genannten Wohnhauses zu bewirkt.

2. Vorrichtung zur Fern-Videoüberwachung nach Anspruch 1, **dadurch gekennzeichnet, dass** sie außerdem Mittel dafür enthält, dass die besagte Ermittlung die automatische Inbetriebnahme eines Videorecorders an dem genannten zentralisierten Kontrollpunkt (40) bewirkt, der alle Bilder aufzeichnet, die von mindestens einer Videokamera (22, 23; 32, 33) empfangen werden, die von dem Vorfall betroffen sind.

3. Vorrichtung zur Fern-Videoüberwachung nach Anspruch 1 oder 2, **dadurch gekennzeichnet, dass** der Signalverlauf in Richtung des besagten zentralisierten Kontrollpunktes (40) und der Übertragungsstopp der Signale auf dem Kabelnetz durch einen Wechselrichter (26, 36) erreicht wird, der am Eingang des genannten entsprechenden Modulators angeordnet ist (20, 30) und von besagter Sicherheitslinie (24, 34) ausgehend gesteuert wird.

4. Vorrichtung zur Fern-Videoüberwachung nach Anspruch 1 oder 2, **dadurch gekennzeichnet, dass** der Signalverlauf in Richtung des besagten zentralisierten Kontrollpunktes (40) und der Übertragungsstopp der Signale auf dem verkabelten Netz durch einen Wechselrichter (43) erreicht wird, der mit der Ausgangklemme (6) der genannten Vorrichtung (2) in Reihe geschaltet ist und von besagter Sicherheitslinie (24, 34) ausgehend mittels eines Verknüpfungsgliedes (45) gesteuert wird.

5. Vorrichtung zur Fern-Videoüberwachung nach einem der vorhergehenden Ansprüche, **dadurch gekennzeichnet, dass** besagte Sicherheitslinie (24, 34) unter anderem besagte konstante Videoüberwachungskamera (22, 32) ab- und eine sogenannte spezielle Sicherheits-Videoüberwachungskamera (23, 33) anschaltet.

6. Vorrichtung zur Fern-Videoüberwachung nach einem der vorhergehenden Ansprüche, **dadurch gekennzeichnet, dass** sie ein Überbrückungsmittel (42) enthält, das zwischen seinen mit dem benannten Verteilerkabelnetz verbundenen Klemmen (4,6) angeordnet und dafür vorgesehen ist, die besagte Vorrichtung ausser Betrieb zu setzen, falls eines ihrer Bestandteile ausfallen sollte.

7. Vorrichtung zur Fern-Videoüberwachung nach Anspruch 5, **dadurch gekennzeichnet, dass** sie ein autonomes Signalisierungssmittel enthält, wodurch es ihr möglich ist, besagten zentralisierten Kontrollpunkt (40) vor ihrer Ausserbetriebsetzung zu warnen.

## Claims

1. A televideo monitoring device for sensitive residential areas already provided with a cable television network for a plurality of television signal channels, said device (2) being assembled in series with said cable television network and determining additional television channels for the users of said network, said additional channels each being defined by a modulator (20, 30) linked at least to one video camera (22, 32) of continuous monitoring of one of said sensitive residential areas, in such a way that in each point of said residential area linked to the cable television network it is normally possible to see an image issued by said video camera (22, 32) on a conventional television screen, said residential area comprising a centralised control point (40) capable of receiving the signals emitted from said at least one continuous monitoring video camera (22, 32),
**characterised in that**
each continuous monitoring video camera (22, 32) is connected to a security line (24, 34) capable of detecting the occurrence of at least one specific event, said device (2) comprising means (26, 36, 43) such that said detection triggers a corresponding signal applied to a centralised control point (40) and stops the transmission of corresponding signals on the corresponding supplementary channel of the residence cable television network.

2. A televideo monitoring device according to Claim 1, **characterised in that** it comprises also means such that said detection triggers the automatic functioning of a video in said centralised control point (40) registering all the images received from at least one video camera (22, 23, 32, 33) corresponding to said occurrence.

3. A televideo monitoring device according to Claim 1 or 2, **characterised in that** the transmission of signals applied to the centralised control point (40) and the stopping of the transmission of the signals to the cable television network is obtained by means of a inverter placed at the entrance of said corresponding modulator (20, 30) and commanded from said security line (24, 34).

4. A televideo monitoring device according to Claim 1 or 2, **characterised in that** the transmission of signals to said centralised control point (40) and the stopping of the transmission of signals to the cable television network is obtained by means of a inverter (43) placed in series with the output socket (6) of said device (2) and commanded from said security line (24, 34) by means of a logic gate (45).

5. A televideo monitoring device according to any of the preceding Claims, **characterised in that** said security line (24, 34) commands also the disconnection of said continuous monitoring video camera (22, 32) and the connection of a so called security specific monitoring video camera (23, 33).

6. A televideo monitoring device according to any of the preceding Claims, **characterised in that** it comprises a shunt means (42) placed between its sockets (4, 6) linked to said cable television distribution network and provided to disconnect the device (2) in case of a misfunction of any of its components.

7. A televideo monitoring device according to Claim 5, **characterised in that** it comprises an autonomous signalling means capable of informing said centralised control point (40) of its disconnection.
